# EUROPEAN PATENT APPLICATION

(11) **EP 4 850 779 A1**
(43) Date of publication of application: **09.12.2026**
(21) Application number: 25181462.0
(22) Date of filing: 06.06.2025
(51) Int. Cl.: B01D 25/26, B01D 63/08

(54) **MODULAR ASSEMBLY KIT FOR ASSEMBLING A FILTRATION DEVICE**

(71) Applicant: Sartorius Stedim Biotech GmbH, 37079 Göttingen (DE)
(72) Inventor: JAKOB, Fabian, 37079 Göttingen (DE); FRIESE, Thomas, 37079 Göttingen (DE); PURSHOUSE, Martin, Stonehouse, Gloucestershire, GL10 3UT (GB)
(74) Representative: Prinz & Partner mbB

(57) **Abstract**

A modular assembly kit for assembling a filtration device, in particular a small-scale filtration device, for production and/or processing of biopharmaceuticals, comprises at least a plurality of top covers (102, 202, 302) and a plurality of bottom covers (104, 204, 304). A first top cover (102) has an inlet structure (106) formed on its upper side for supplying unfiltrate, and a first bottom cover (104) has a filtrate outlet structure (108) formed on its lower side for discharging filtrate. A first filter chamber (502) is formed between the first bottom cover (104) and a further bottom cover (204; 304), and a second filter chamber (504) is formed between the further bottom cover (204; 304) and a further top cover (202). A first lower filter support (114) is formed in the first filter chamber (504) and carries a first lower filter (113) having or contributing to a first filter area. A further inner lower filter support (214) is formed in the second filter chamber (504) and carries a further inner lower filter (213) having or contributing to a second filter area, the second filter area being larger than the first filter area. The first top cover (102), the further top cover (202), the first bottom cover (104) and the further bottom cover (204; 304) are arranged in a stacked arrangement along a general vertical flow direction (A). The first top cover (102) is mounted on the outside of the further top cover (202), and the first bottom cover (104) is mounted on the outside of the further bottom cover (204; 304).

## Description

The invention relates to a modular assembly kit for assembling a filtration device, in particular a small-scale filtration device for production and/or processing of biopharmaceuticals.

In recent years, the biopharmaceutical industry has increasingly relied on various filtration processes to ensure the purity and quality of drug formulations. These processes often involve complex filtration devices which must meet stringent requirements for flow management, filtration efficiency, and scalability. Typically, filter housings are responsible for directing the flow within the unit and guiding the medium to be filtered through the filter membrane. A critical challenge lies in ensuring a gap-free connection between the filter material and the housing, while allowing for good flow and complete ventilation.

Despite technological advancements, existing filtration devices face several limitations, particularly concerning flexibility and cost-efficiency. Traditional filtration units are usually not designed with modularity at the forefront, thereby hindering the ability to adapt quickly to varying customer requirements or reuse parts effectively. This lack of flexibility often results in high production costs and lengthy development cycles, especially when scaling up production. Additionally, many existing devices are not designed to integrate additional functions easily, which could otherwise enhance their versatility and economic viability.

One notable example from the existing state of the art is a small-scale filtration device used for biopharmaceuticals, as described in EP 4 454 739 A1. The device features a filter support equipped with flat, identically shaped upper and lower filters. These filters are sealed to the filter support in such a manner that prevents unfiltered fluid from bypassing and ensures filtrate is properly guided to the outlet. While this design achieves a certain degree of efficiency and ease of assembly, it still does not fully address the issues of scalability and integration of multiple functions within a single platform.

The specific problems with current technologies are the limited scalability, high production costs, and the inability to incorporate varied functional requirements within a single, adaptable system. These issues are particularly pronounced in processes that require rapid adaptation to different filtration needs or when producing small to medium batches of biopharmaceuticals. Furthermore, existing designs often lack the modular elements necessary to interchange or extend filter areas without significant redesign or replacement of core components.

The invention provides a modular assembly kit for assembling a filtration device, in particular a small-scale filtration device, for production and/or processing of biopharmaceuticals, comprises at least a plurality of top covers and a plurality of bottom covers. A first top cover has an inlet structure formed on its upper side for supplying unfiltrate, and a first bottom cover has a filtrate outlet structure formed on its lower side for discharging filtrate. A first filter chamber is formed between the first bottom cover and a further bottom cover, and a second filter chamber is formed between the further bottom cover and a further top cover. A first lower filter support is formed in the first filter chamber and carries a first lower filter having or contributing to a first filter area. A further inner lower filter support is formed in the second filter chamber and carries a further inner lower filter having or contributing to a second filter area, the second filter area being larger than the first filter area. The first top cover, the further top cover, the first bottom cover and the further bottom cover are arranged in a stacked arrangement along a general vertical flow direction. The first top cover is mounted on the outside of the further top cover, and the first bottom cover is mounted on the outside of the further bottom cover.

The invention addresses the above-mentioned challenges by introducing a modular assembly kit for assembling a filtration device that combines flexibility, cost-effectiveness, and functionality. The new system employs a modular assembly comprising various top and bottom covers and filter supports of different sizes, allowing the combination of different filter areas within one basic setup. This setup enables the reuse of existing or legacy components, or at least their basic approved designs. For example, an existing design of a filtration device having an approved inlet structure and an approved outlet structure can be used in connection with another filtration device of larger size. This means that there is no need to design a new inlet structure and a new outlet structure for the larger device and have them approved. Instead, the design of the larger device is combined with the existing design of the smaller device. Of course, it is to be understood that such a combination may still require some minor adaptations. One of the main benefits of such a combination is that each design can bring additional functionalities to the overall device. Thus, the invention significantly reduces the need for expensive new developments and tool costs while remaining economically viable for small batch productions.

The modular nature of the proposed assembly kit allows for seamless integration of various additional functions, such as redundant filtration setups or different filtration stages within the same basic setup. The flexibility to configure the filter surfaces in varying ratios also enables precise scaling according to specific production requirements. Additionally, the innovative design combination ensures a fluid-tight connection and smart flow management, enhancing overall filtration performance and device stability.

In summary, the invention offers a transformative approach to biopharmaceutical filtration by overcoming the inherent limitations of traditional devices. It provides a scalable, modular solution capable of integrating multiple functions within a single, adaptable platform. With the inventive modular concept, a complete filtration process involving multiple filtration stages can be conducted in one compact filtration device, eliminating the need for hose connections between different filter units and optimizing the hold-up volume. This advance not only improves the efficiency and cost-effectiveness of the filtration process but also supports rapid adaptation to changing production needs, thereby offering significant benefits to the biopharmaceutical industry.

With respect to the size of the filter areas, it is to be understood that the overall filter area of the second filter chamber is larger than the overall filter area of the first filter chamber. Preferably, the filter area of the further inner lower filter alone is larger than the filter area of the first lower filter. Depending on the intended application of the filtration device, the difference in size of the filter areas may be relatively small or relatively big, or somewhere in-between. For example, in one embodiment the smaller filter can have an filter area that is 98% the size of the filter area of the larger filter, whereas in another embodiment it is only 2%, and in further embodiments it is about 75%, 50%, 25% or 10%. Of course, the above-mentioned filter areas only relate to the corresponding filters. It is to be understood that each filter chamber may include additional filters, so that the overall filter area of a chamber can further be varied by the number of filters if the filters in the respective chamber are arranged in parallel. Accordingly, a filter in a filter chamber can either "have" a filter area, if it is the only filter in the chamber, or it can "contribute to" a filter area, if further filters are arranged in parallel in the chamber.

According to the invention, the further inner lower filter support and the further inner lower filter are arranged in a second filter chamber that is formed between the further bottom cover and the further top cover. This means that a filtration performed by the further inner lower filter takes place in a partial arrangement of the combined filtration device that corresponds to the design of an established filtration device. However, before and after the filtration is performed in the second filter chamber, the combined filtration device makes use of the functions provided by the first top cover and the first bottom cover.

In terms of the invention, "filters arranged in parallel" relates to the general flow path of the medium through the filtration device, meaning that appropriate flow passages are provided so that the medium to be filtered reaches the unfiltrate sides of the filters simultaneously, whereas "filters arranged in series" also relates to the general flow path of the medium through the filtration device, but means that the medium must pass through the previous filter before it reaches the following filter. The same applies to groups of filters and filter chambers. For example, if a previous group or chamber and a following group or chamber are arranged in series, the filters within the previous group or chamber may be arranged in parallel, but the medium only reaches the following group or chamber after it has passed through one of the filters of the previous group.

Regarding the term "vertical", it is to be understood that the filtration device is designed such that gravity may at least assist the flow of the medium to be filtered through the device from the unfiltrate inlet structure to the filtrate outlet structure. Accordingly, the typical use position of the filtration device is an upright position, with the first top cover located above the first bottom cover, and the further top cover and the further bottom cover arranged accordingly in-between the first top cover and the first bottom cover. Of course, it is not necessary that a "vertical direction" or "vertical axis" is perfectly vertical. Moreover, the filtration device may also be used in other positions, such as in a horizontal orientation, since the medium is mainly urged through the filtration device by an externally applied pressure. Thus, also terms such as "top", "bottom", "upper", "lower", "upward", "downward", "horizontal" etc. refer to a vertical axis or direction which corresponds to the typical upright use position of the filtration device, but they are not to be understood in a limiting sense regarding the orientation of the filtration device. Some of these terms are mainly used to indicate positions or locations relative to one another.

Especially the terms that are used to distinguish the different filters, filter supports and filter chambers of the filtration device from each other, such as "first", "second", "third", "further", "upper", "lower", "inner", "outer", are not to be understood in a limiting sense. The terms refer to the specific embodiments that will be described later and are used in an illustrative manner to indicate their relative position.

According to a preferred configuration, the horizontal dimensions of the first top cover and the first bottom cover are smaller than the horizontal dimensions of the further top cover and the further bottom cover. This configuration advantageously allows for easy assembly and a compact design that can accommodate varying sizes of filters. Preferably, the horizontal dimensions of the first top cover and the first bottom cover, and/or the horizontal dimensions of the further top cover and the further bottom cover, are the same, further simplifying the assembly process and enabling easier scalability.

According to basic simple variants of the filtration device to be assembled from the modular assembly kit, only one filter is provided in the first filter chamber and/or only one filter is provided in the second filter chamber. In these variants, the first lower filter support of the first filter chamber is preferably formed on the upper side of the first bottom cover, and/or the further inner lower filter support of the second filter chamber is formed on an upper side of the further bottom cover.

The first filter chamber and/or the second filter chamber may be equipped with additional filter supports and, optionally, with additional filters. Accordingly, a further outer lower filter support, optionally carrying a further outer lower filter can be formed in the first filter chamber, preferably on the lower side of the further bottom cover, and/or a further inner upper filter support, optionally carrying a further inner upper filter, can be formed in the second filter chamber, preferably on the lower side of the further top cover. Additional filters in a filter chamber either increase the filter area, if the filters in the chamber are arranged in parallel, or they provide further filtration steps, if they are arranged in series. If a filter support does not carry a filter, the structured surface of the filter support can contribute to a more even distribution of the medium in the filter chamber with respect to an opposite filter.

According to one design of the filtration device, passages and/or structures are provided in the further top cover so that the second filter chamber and the first filter chamber are arranged in series, i.e. only after filtration in the second filter chamber is completed, the medium is guided to the first filtration chamber. The passages and/or structures in the further top cover may include a blocking structure that prevents the medium from directly leaving the filtration device through the filtrate outlet.

If a plurality of filters is provided in the first filter chamber formed between the first bottom cover and the further bottom cover, it is preferred that the filters in the first filter chamber are arranged in series. This allows, for example, multi-stage filtration if filters with different filter parameters (such as pore size) are used, or redundant filtration if filters having substantially the same filtration parameters are used, in the first filter chamber.

If a plurality of filters is provided in the second filter chamber formed between the further bottom cover and the further top cover, it is preferred that all filters in the second filter chamber or certain filters (213, 240, 406, 406a, 406b) within a group of filters in the second filter chamber are arranged in parallel. This allows to enlarge the filter area of a certain filtration step within the second filter chamber.

In addition to the first and second filter chambers, the filtration device to be assembled from the modular assembly kit can have a third filter chamber (or even more filter chambers). In particular, the third filter chamber can be formed between the first top cover and the further top cover with at least one further outer upper filter support carrying a further outer upper filter. Preferably, the third filter chamber is in fluid connection with the unfiltrate inlet structure and passages are provided in the further top cover so that the third filter chamber and the second filter chamber are arranged in series. This means that only after filtration in the third filter chamber is completed, the medium is guided to the second filtration chamber. This allows for even more filtration functions and flexibility within a single filtration device.

Like the first and second filter chambers, the third filter chamber can be equipped with additional filters. In particular, a first upper filter support, optionally carrying a first upper filter, can be formed on the lower side of the first top cover. Similar to the first filter chamber, the filters in the third filter chamber preferably are arranged in series.

Especially in the second filter chamber, it may be beneficial to increase the number of filters to enlarge the filter area for the filtration step performed in the second filter chamber. Such further filters can be carried by further filter supports formed on one or more further top covers and/or further bottom covers, and/or additional filter support plates, provided in the stacked arrangement between the first top cover and the first bottom cover. This means that at least one further component (top cover or bottom cover or filter support plate) having at least one further filter support and carrying at least one further filter is inserted into the stack at a suitable location. In view of scalability, especially the implementation of one or more filter support plates allows the device to handle larger volumes of medium, since the filter area can be increased stepwise by such filter support plates. This means that the filter area can be easily adapted to the actual need.

The horizontal dimension of each additional filter support plate is preferably substantially the same as the horizontal dimensions of the adjacent top cover and/or the adjacent bottom cover and/or the adjacent filter support plate, respectively, thus ensuring compatibility and ease of assembly.

In a more complex embodiment, the modular assembly kit features at least one intermediate element arranged in the second filter chamber. The intermediate element divides the filters in the second chamber into an upper group above the intermediate element and a lower group below the intermediate element. Preferably, the filters of the upper group are arranged in parallel and the filters of the lower group are arranged in parallel, and the upper group and the lower group are arranged in series. With this configuration, the filtration efficiency and versatility of the filtration device can be further enhanced. In particular, the implementation of such an intermediate element allows for a parallel flow arrangement of an upper group of filters and directs the filtered medium to a lower group of filters for further processing. This concept provides a flow scheme with several groups of filters being connected in series, while the filters of each group are connected in parallel.

With respect to joining the individual components in the stacked arrangement, preferably each top cover, each bottom cover and each filter support plate (if any) has at least one joining portion for joining to a matching joining portion of an adjacent top cover or bottom cover or filter support plate (if any). The joining portions are preferably formed on an upper and/or lower end face of a circumferential peripheral side wall of the respective top cover or bottom cover or filter support plate.

The preferred joining technique for all top and bottom covers and support plates arranged between them is welding, as it ensures a secure and fluid-tight connection between the components, enhancing the filtration efficiency and reliability. However, other techniques, such as gluing or clamping, may also be suitable.

For an easy, accurate alignment and mounting of the top and bottom covers as well as any optional filter support pate(s) and intermediate element(s), it is preferred that the horizontal courses of the peripheral side walls with opposing matching joining portions are substantially identical. This symmetry in the design of the peripheral side walls facilitates the modular concept of the assembly kit, allowing for easy interchangeability and scalability of the stacked filtration device components.

The invention also provides a filtration device, in particular a small-scale filtration device for production and/or processing of bio-pharmaceuticals, the filtration device being assembled from the modular assembly kit according to the invention.

Finally, the invention provides a method of filtration using the filtration device assembled from the modular assembly kit according to the invention. The method comprises a filtration performance that includes at least one of the following: a multi-stage filtration, preferably with different filter parameters, such as pore size, of the first and second filters; a redundant filtration, preferably with filters having substantially the same filtration parameters; a sterile filtration; a virus filtration, (preferably with a prefilter and a main filter; a depth filtration; a purification by means of filters configured as membrane adsorbers. This flexibility supports a wide range of biopharmaceutical production or processing needs.

Further features and advantages of the invention will become apparent from the following description and from the accompanying drawings to which reference is made. In the drawings:
- Figure 1 symbolically shows the combination of a first filtration device according to a first design with a second filtration device according to a second design;
- Figure 2 shows a first filtration device according to a first design; and
- Figures 3 to 13 show cross-sections of eleven different embodiments of a filtration device assembled from a modular assembly kit according to the invention.

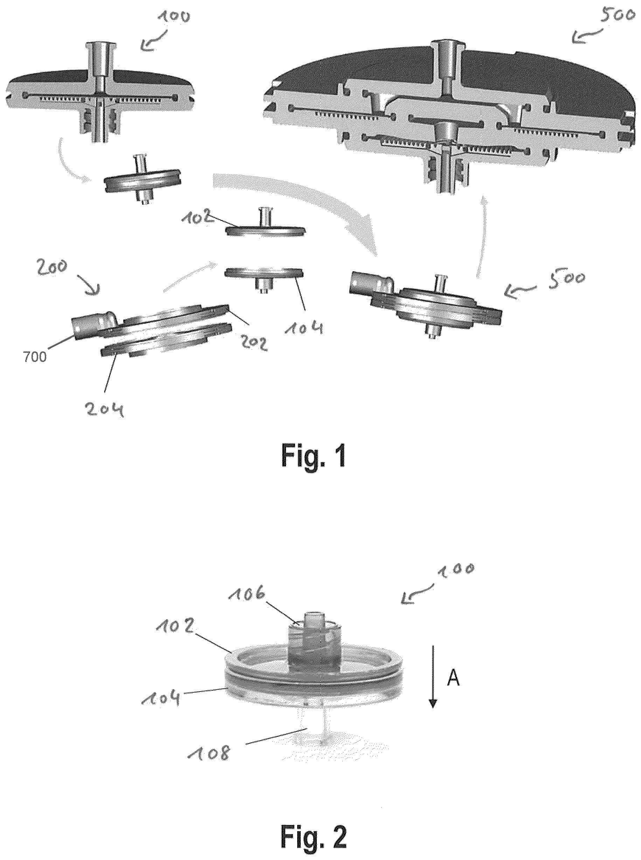

In Figure 1 the basic concept of a modular assembly kit for assembling a filtration device for production and/or processing of biopharmaceuticals is shown. In the particular example depicted in Figure 1, the designs of two different small-scale filtration devices 100, 200 are combined, resulting in a new functional filtration device 500. The different filtration devices, i.e. a first filtration device 100 according to a first design and a second filtration 200 device according to a second design, and possible combination of their designs, and potential further designs, will be explained in detail below with reference to Figures 1 to 13.

Figure 2 shows only the first filtration device 100 according to the first design in a typical upright use position of such devices in general. A downward vertical direction 'A' indicates the general flow direction of the medium to be filtered through such a filtration device. In the following, terms such as "top", "bottom", "upper", "lower", "horizontal", etc. relate to the upright use position and the general vertical flow direction 'A' shown in Figure 2.

The first filtration device 100 comprises a top cover 102 and a bottom cover 104. Here, the top cover 102 and the bottom cover 104 have a plate-like structure. They are preferably disc-shaped with a circular outer periphery having similar or identical outer diameters with respect to a central vertical axis of the device.

The top cover 102 has an unfiltrate inlet structure 106, and the bottom cover 104 has a filtrate outlet structure 108, both being located at central positions with respect to the central vertical axis, but decentralized or peripheral positions are also possible. The unfiltrate inlet structure 106 and the filtrate outlet structure 108 include established and approved connection fittings, such as Luer fittings, Sanitary fittings, Olive fittings, or hose barbs.

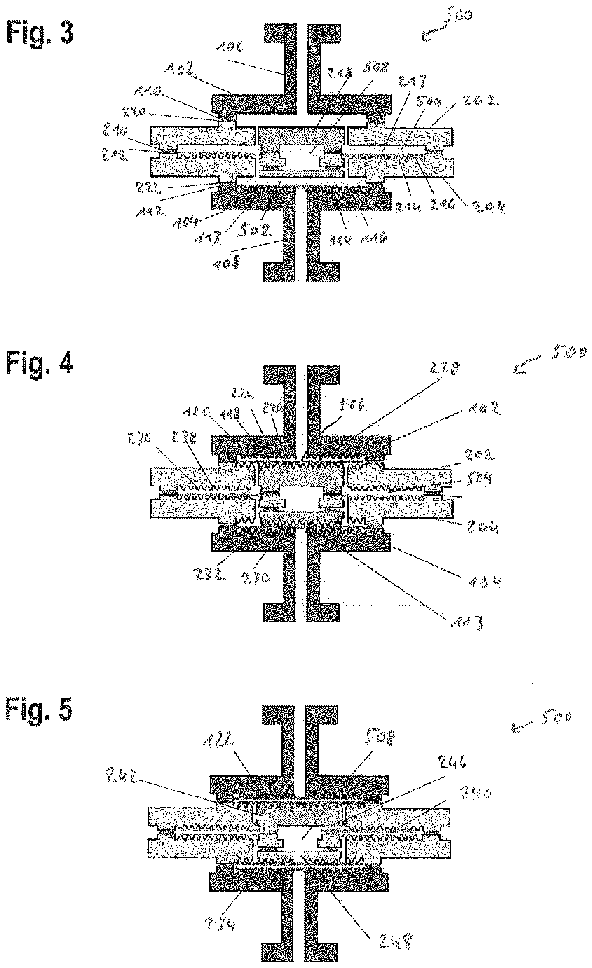

In the following, with respect to the reference numerals, reference is also made to Figure 3, which shows a combination of the first filtration device 100 and the second filtration device 200 that will be described in more detail later.

The top cover 102 and the bottom cover 104 of the first filtration device 100 have circumferential peripheral side walls with a lower joining portion 110 and an upper joining portion 112, respectively. The horizontal courses of these peripheral side walls and joining portions 110, 112 are identical.

The bottom cover 104 is configured to support a lower filter 113, preferably a flat filter (membrane). In particular, the bottom cover 104 has a lower filter support 114 on its upper side, including lower guiding channels 116. When the lower filter 113 is placed on the lower filter support 114, an upper unfiltrate side of the lower filter 113 faces the unfiltrate inlet structure 106 and a lower filtrate side faces the lower guiding channels 116 of the lower filter support 114.

The design of the second filtration device 200 is similar to the design of the first filtration device 100. Similar components or structures of the filtration devices have the same reference numerals, the range of reference numerals between 100 and 199 referring to the first filtration device 100 and the range between 200 and 299 referring to the second filtration device 200. In the following, all components or structures according to the design of the first filtration device 100 will be referred to as "first" component or structure, e.g. first top cover 102, and all components or structures according to the design of the second filtration device 200 will be referred to as "second" component or structure, e.g. second top cover 202.

However, the second filtration device 200 is larger than the first filtration device 100, especially with respect to the outer dimensions. For example, the diameter of the second top cover 202 and the second bottom cover 204 is configured such that a circular second inner lower filter 213 having a filter area of 20 cm² can be placed on the second inner lower filter support 214, whereas the first filtration device 100 can only accommodate a first filter having a filter area of 5 cm² on the first lower filter support 114.

The top cover 202 of the second filtration device 200 includes a blocking structure 218, which can be a separate part connected with the top cover 202 or formed integral with the top cover 202. The purpose of the blocking structure 218 will be explained later.

As shown in Figure 1, the first filtration device 100 and the second filtration device 200 are combined to obtain a new functional filtration device 500. It is to be noted that for the combination the second filtration device 200 is used without any connection fittings.

Possible different embodiments of combined filtration devices 500 are shown in the schematic representations of Figures 3 to 13 and will be explained in more detail below.

According to a first embodiment shown in Figure 3, the second top cover 202 and the second bottom cover 204 are sandwiched between the first top cover 101 with the unfiltrate inlet structure 106 and the first bottom cover 104 with the filtrate outlet structure 108. Accordingly, the first top cover 102, the second top cover 202, the second bottom cover 204 and the first bottom cover 104 are arranged in this sequence in a stacked arrangement along the general vertical flow direction 'A' (cf. Figure 2). While a concentric configuration is shown in Figure 3, especially the first top cover 102 and the first bottom cover 104 may also be positioned offset with respect to the central vertical axis of the second filtration device 200.

The first top cover 102 and the first bottom cover 104 are not mounted to each other according to the original design of the first filtration device 100 (as shown in Figure 2). Rather, the first top cover 102 is mounted to the outside of the second top cover 202, and the first bottom cover 104 is mounted to the outside of the second bottom cover 204.

In particular, the first top cover 104 has its first lower joining portion 110, which is formed on a lower end face of the peripheral side wall of the first top cover 102, joined to a corresponding second top cover upper joining portion 220 on the upper side of the second top cover 202.

The first bottom cover 104 has its first upper joining portion 112, which is formed on an upper end face of the peripheral side wall of the first bottom cover 104, joined to a corresponding second bottom cover lower joining portion 222 on the lower side of the second bottom cover 204. Thus, a laterally sealed first filter chamber 502 is formed between first bottom cover 104 and the second bottom cover 204 in which the first lower filter support 114 and the second inner lower filter 213 are located. The peripheral side wall of the first bottom cover 104 completely surrounds the first filter chamber 502.

By contrast, the second top cover 202 and the second bottom cover 204 are directly fixed to each other. The second lower joining portion 210 formed on a lower end face of the peripheral side wall of the second top cover 202 is joined to the corresponding second upper joining portion 212 formed on an upper end face of the peripheral side wall of the second bottom cover 204 in a fluid-tight manner. Thus, a laterally sealed second filter chamber 504 is formed between the second top cover 202 and the second bottom cover 204 in which the second inner lower filter support 214 and the second inner lower filter 213 are located. The peripheral side walls of the second top cover 202 and the second bottom cover 204 completely surround the second filter chamber 504.

In the first embodiment shown in Figure 3, the second inner lower filter support 214 allows the use of the second inner lower filter 213 in the second filter chamber 504, in addition to the first lower filter 113 in the first filter chamber 502. Apart from the larger filter area, the second inner lower filter 213 can either have the same properties as the first lower filter 113, or it may differ from the first lower filter 113, especially in one or more of the following parameters: material; nominal or maximum pore size; nominal filter retention (efficiency); nominal volume flow; number of layers. For redundant filtration, it is useful that the first lower filter 113 has the same properties as the second inner lower filter 213. However, for most combination filtration tasks it is required that the first and second filters 113, 213 have different properties.

The flow of the medium through the first embodiment of the combined filtration device 500 shown in Figure 3 is as follows: The medium to be filtered (unfiltrate) is supplied through the inlet structure 106 and is prevented from directly reaching the outlet structure 108 of the first bottom cover 104 by the blocking structure 218. The medium is rather guided into the second filter chamber 504 and distributed over the unfiltrate side of the second inner lower filter 213 via passages in the second top cover 202, which includes the blocking structure 218.

After the medium has passed through the second inner lower filter 213, it is collected by the second inner lower guiding channels 216 of the second inner lower filter support 214 and then guided into the first filter chamber 502 via passages in the second bottom cover 204. The medium is distributed over the unfiltrate side of the first lower filter 113 and passes through the first lower filter 113. The medium either directly enters the outlet structure 108 since part of the first lower filter 113 extends over the central opening of the outlet structure 108, or it is collected by the first lower guiding channels 116 of the first lower filter support 114 and guided into the outlet structure 108.

The components of the first filtration device 100 and the components of the second filtration device 200 that are combined to create the combined filtration device 500 can be considered as a modular assembly kit for assembling a multiple filtration device.

The concept of the assembly kit allows further variants and addition of further components, some of which will be explained below in connection with the other exemplary embodiments shown in Figures 4-13. In the various embodiments, similar components or structures are designated with the same reference numerals, and the description will focus on the differences and the peculiarities of the individual embodiments.

The overall structures of the embodiment shown in Figures 4-6 are very similar to the one of the first embodiment shown in Figure 3. However, in contrast to the first embodiment, more filters are provided.

In a second embodiment shown in Figure 4, a second outer upper filter support 224 having second outer upper guiding channels 226 and carrying a second outer upper filter 228 is formed on a portion of the upper side of the second top cover 204 that is surrounded by the second top cover upper joining portion 220. Thus, the second outer upper filter support 224 is located in a third filter chamber 506 that is further defined by the first lower joining portion 110 and the lower side of the first top cover 102.

The flow of the medium through the second embodiment is different in that the unfiltrate supplied through the inlet structure 106 is first guided into the third filter chamber 506 and distributed over the unfiltrate side of the second outer upper filter 228. This distribution may be assisted by first upper guiding channels 118 of an otherwise unused first upper filter support 120 formed on the lower side of the first top cover 102. ("Otherwise unused" means that no filter is placed on this filter support.) After the medium has passed through the second outer upper filter 228, it is collected by the second outer upper guiding channels 226 of the second outer upper filter support 224 and then guided into the second filter chamber 504 via passages in the second top cover 202. From there, the flow of the medium is the same as in the first embodiment. As shown in Figure 4, the distribution of the medium over the unfiltrate side of the first lower filter 113 may be assisted by second outer lower guiding channels 230 of an otherwise unused second outer lower filter support 232 formed on the lower side of the second bottom cover 204.

Thus, compared with the first embodiment, the second embodiment provides a further sequential filtration stage.

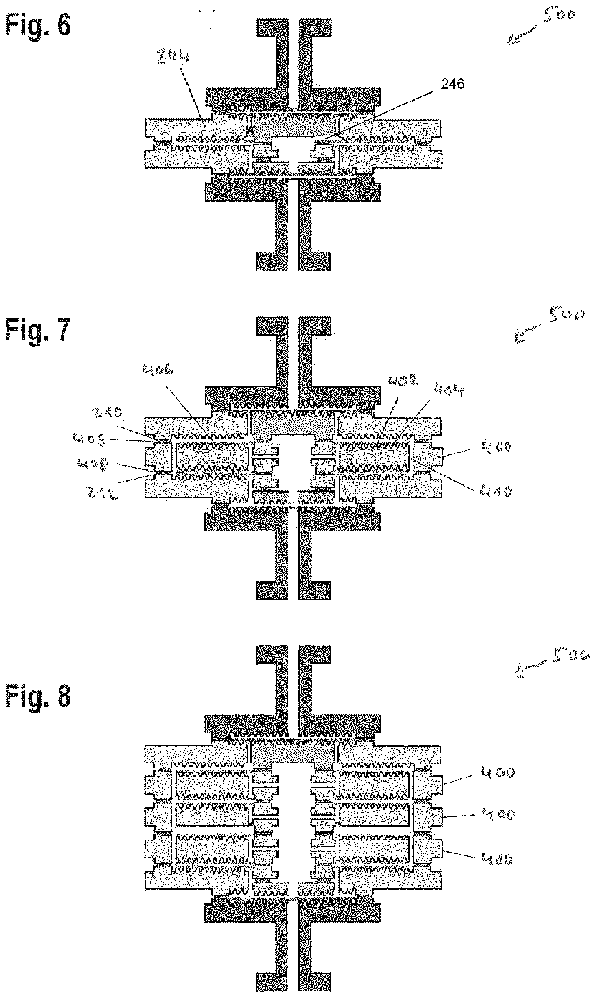

A third and a fourth embodiments shown in Figures 5 and 6, respectively, differ from the second embodiment in that all three filter chambers 502, 504, 506 are each equipped with a further filter. In particular, in the first filter chamber 502, a second outer lower filter 234 is provided on the second outer lower filter support 232, and in the third filter chamber 506 a first upper filter 122 is provided on the first upper filter support 120. In the second filter chamber 504, a second inner upper filter support 236 having second inner upper guiding channels 238 and carrying a second inner upper filter 240 is formed on the lower side of the second top cover 204.

The filters 113 and 234 in the first filter chamber 502 and the filters 122, 228 in the third filter chamber 506 are arranged in series, whereas the filters 213, 240 in the second filter chamber 504 are arranged in parallel. This means that the medium supplied through the inlet structure 106 passes sequentially through the first upper filter 122 and through the second outer upper filter 228 before it is guided into the second filter chamber 504 such that it reaches the space between the unfiltrate sides of the second inner lower filter 213 and the second inner upper filter 240. When the medium has passed through either one of the filters 213, 240, it is guided to the unfiltrate side of the second outer lower filter 234 of the first filter chamber 502 via suitable passages in the second top and/or bottom covers 202, 204 and the central outlet channel 508. The medium then passes sequentially through the second outer lower filter 234 and through the first lower filter 113 before it is guided into the filtrate outlet structure 108.

Figures 5 and 6 show two variants of how the medium can be transferred through the second top cover 202 into the space between the unfiltrate sides of the filters 213, 240 in the second filter chamber 504. According to Figure 5, one or more passages 242 lead through the second top cover 202 to a central portion of the second filter chamber 504 that is sealed from a central outlet channel 508 of the combined filtration device 500. According to Figure 6, one or more passages 244 lead to an outer portion of the second filter chamber 504.

In both the third and fourth embodiment, the medium that has passed through the second inner lower filter 213 is collected by the respective guiding channels 216 and then guided into the first filter chamber 502 via passages in the second bottom cover 204, and the medium that has passed through the second inner upper filter 240 is collected by the respective guiding channels 238 and is guided into the central outlet channel 508 via one or more passages 246. From the central outlet channel 508, the medium is guided into the first filter chamber 502 via one or more passages 248. More particularly, the medium is guided to the unfiltrate side of the second outer lower filter 234. The medium then passes sequentially through the second outer lower filter 234 and through the first lower filter 113 before it is guided into the filtrate outlet structure 108.

Thus, the third and fourth embodiments provide five sequential filtration stages, i.e. two sequential stages in the third filter chamber 506, one parallel stage with an enlarged filtration area in the second filter chamber 504, and two sequential stages in the first filter chamber 502.

As can be seen in a fifth and a sixth embodiment shown in Figures 7 and 8, respectively, one or more additional filter support plates 400 can be arranged between the second top cover 202 and the second bottom cover 204. Such an additional filter support plate 400 has at least one further filter support 402 having further guiding channels 404 and carrying a further filter 406 on its upper and/or lower side (not all of them being designated with reference numerals). As shown, each side of a filter support plate 400 can have a filter support 402 or not, and on each filter support 402 a filter 406 can be placed or not. Of course, a filter support plate 400 can only contribute to a filtration if it has at least one filter 406.

The horizontal dimension of the additional filter support plate(s) 400 is substantially the same as the horizontal dimension of the second top cover 202 and the second bottom cover 204 so that the additional filter support plate(s) 400 can be easily integrated and joined in the stack. Each additional filter support plate 400 has upper and lower joining portions 408 that match with and are joined with opposing joining portions of the neighboring second top cover 202 or the neighboring second bottom cover 204 or a neighboring filter support plate 400.

In the embodiments shown in Figures 7 and 8, the additional filter support plate(s) 400 technically expand the second filter chamber 504 such that the further filters 406 are added to the second filter chamber 504. Passages 410 are provided, which ensure that all unfiltrate sides of all filters 213, 240, 406 in the second filter chamber 504 are supplied with the medium that has passed through the filter(s) 122 and/or 228 in the third filter chamber 506, if present, in parallel. The medium that has been filtered by any filter 213, 240, 406 in the second filter chamber 504 is collected and guided towards the filter(s) 113 and/or 234, if present, in the first filter chamber 502 via passages in the second bottom cover 204 and/or the central outlet channel 508 and one or more passages 248 and/or via other passages.

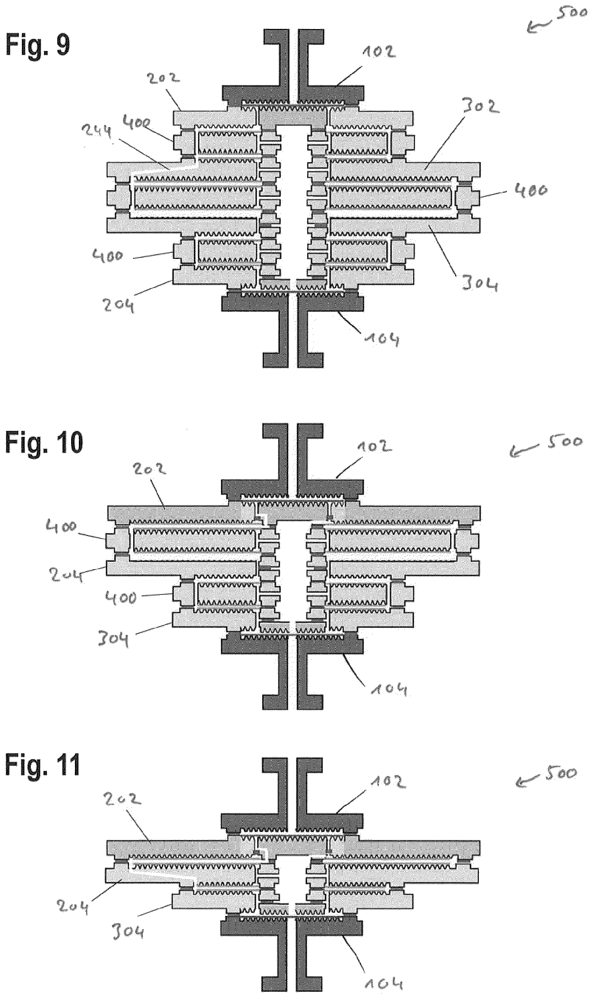

Figures 9 to 11 show further embodiments of the combined filtration device 500 including various numbers of top covers, bottom covers and filtration plates.

For example, a seventh embodiment shown in Figure 9 includes the following sequence (viewed in the general vertical flow direction 'A', cf. Figure 2): a first top cover 102, a second top cover 202, a filter support plate 400, a third top cover 302, a filter support plate 400, a third bottom cover 304, a filter support plate 400, a second bottom cover 204, and a first bottom cover 104. One or two filters may be provided on each of these components according to the principles explained above. In the seventh embodiment, the horizontal dimension of the third top and bottom covers 302, 304 and the filter support plate 400 therebetween, especially their diameter, is larger than the horizontal dimension of the other top and bottom covers and filter support plates.

All filters located between the lower side of the second top cover 202 and the upper side of the second bottom cover 204 belong to the second filter chamber 504. These filters are arranged in parallel, which means that suitable passages ensure that the medium can be distributed to all unfiltrate sides of these filters substantially at the same time. When changing from one horizontal dimension to a different horizontal dimension (transition), either passages similar to the above-mentioned passages 242, 244 (shown exemplarily in Figure 9), 246, 248 can be used, or it is provided that no filter medium is present at the transition (i.e. the filters are interrupted or have holes or the like) and the passages to the central outlet channel 508 are closed at the transition.

Compared with the seventh embodiment, an eighth embodiment shown in Figure 10 lacks one smaller top cover and one smaller filter support plate. As can be seen, due to the different filter configuration of the second top cover 202, a slightly different passage is required to guide the medium into the second filter chamber 504 and to the uppermost filters.

Figure 11 shows a ninth embodiment, in which no filter support plate 400 is present. Between a first top cover 102 and a first bottom cover 104, a larger pair of a second top cover 202 and a second bottom cover 204 is followed by a smaller single third bottom cover 304 (which is still larger than the first top and bottom covers 102, 104). This example shall demonstrate that, generally, it is not mandatory that matching pairs of top and bottom covers are required to create a functional combined filtration device 500.

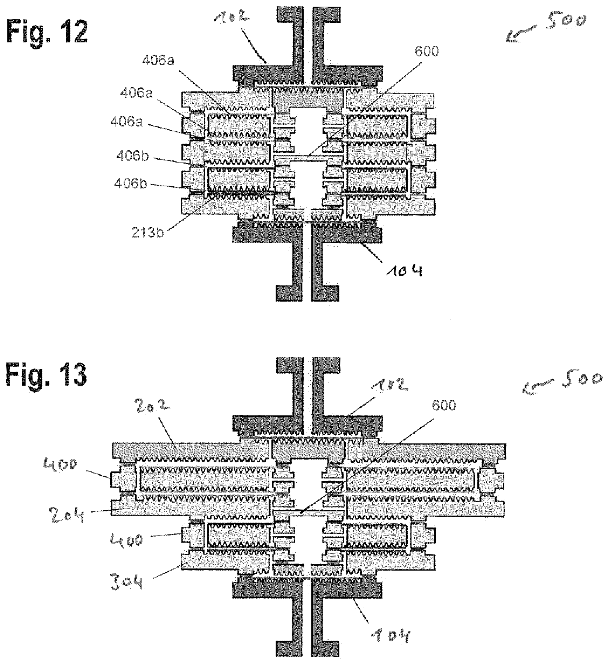

Figures 12 and 13 show a tenth and an eleventh embodiment, respectively, which make use of an intermediate element 600. Such an intermediate element 600 divides the filters of the second filter chamber 504 into an upper group above the intermediate element 600 and one lower group below the intermediate element 600. In Figure 12, the filters belonging to the upper group are supplemented with an "a", whereas the filters belonging to the lower group are supplemented with a "b".

In the tenth and eleventh embodiment, the intermediate element 600 acts as a blocking structure that changes the sequence of flow through the filters. In particular, the filters of the upper group 406a are arranged in parallel, and the intermediate element 600 blocks the medium that has not passed through any filter of the upper group 406a from reaching the unfiltrate sides of the filters of the lower group 406b, 213b. Appropriate passages collect the medium that has passed through any one of the filters of the upper group and provide it to the unfiltrate sides of the filters of the lower group.

The tenth and eleventh embodiment differ from each other in that in the tenth embodiment the filters of the upper group and the filters of the lower group have the same diameter, whereas in the eleventh embodiment the filters of the upper group have a larger diameter than the filters of the lower group.

Generally, the preferred technique of fluid-tightly joining the top and bottom covers such as 102, 104, 202, 204 and the filter support plate(s) 400, if present, is heat welding or ultrasonic welding, although other techniques, such as gluing may also be suitable.

As shown in Figure 1, a vent structure 700 may be provided for venting one or more areas in the combined filtration device 500. In particular, the venting structure 700 may be fluidically connected with one or more of the filter chambers and/or with the inlet structure 106. Apart from venting during the use of the combined filtration device 500, the vent structure 700 can be used to test for leakages in or integrity of the combined filtration device 500.

It is to be noted that many aspects of the invention have been described in connection with one or more specific embodiments. However, the skilled person understands that at least some of these aspects are of a more general nature and can be used in other embodiments or variants. Generally, certain features of the exemplary embodiments can be combined in various ways in a suitable manner, thus creating further embodiments with different functionalities.

In this context, it is to be noted that in any embodiment of the combined filtration device 500 the number of filter supports having guiding channels and the number of filters may vary. Each first top cover 102 and each first bottom cover 104 may have one or zero filter supports. Each other top cover and bottom cover and each filter support plate may have one or two zero filter supports. On each filter support, a filter may be placed or not. Of course, the combined filtration device only works when at least one filter is provided on one filter support, and in all reasonable embodiments at least one filter is provided in each of the filter chambers 502 and 504.

More complex embodiments may include more than one first top cover 102 mounted on the outside of the second top cover 202 and/or more than one first bottom cover 104 mounted on the outside of the second bottom cover 204. For example, an additional first top cover 102 can be used to supply another unfiltrate medium or another kind of fluid, such as a cleaning fluid. The additional first top/bottom cover(s) may also accommodate a sensor or can be used for sampling or for venting the combined filtration device 500.

Depending on the number, sizes and types of filters used in the combined filtration device 500 and depending on the flow scheme (strictly serial flow scheme or serial flow through parallel groups of filters), one or more of the following filtration types/methods can be performed with the combined filtration device 500: a multi-stage filtration (with different filter parameters, such as pore size) of the first and second filters; a redundant filtration (filters having substantially the same filtration parameters); a sterile filtration; a virus filtration (preferably with a prefilter and a main filter); a depth filtration; a purification by means of filters configured as membrane adsorbers.

### List of Reference Signs

100 first filtration device
102 first top cover
104 first bottom cover
106 unfiltrate inlet structure
108 filtrate outlet structure
110 first lower joining portion
112 first upper joining portion
113 first lower filter
114 first lower filter support
116 first lower guiding channels
118 first upper guiding channels
120 first upper filter support
122 first upper filter
200 second filtration device
202 second top cover
204 second bottom cover
210 second top cover lower joining portion
212 second bottom cover upper joining portion
213 second inner lower filter
214 second inner lower filter support
216 second inner lower guiding channels
218 blocking structure
220 second top cover upper joining portion
222 second bottom cover lower joining portion
224 second outer upper filter support
226 second outer upper guiding channels
228 second outer upper filter
230 second outer lower guiding channels
232 second outer lower filter support
234 second outer lower filter
236 second inner upper filter support
238 second inner upper guiding channels
240 second inner upper filter
242 passage in a top cover from a filtrate side of a previous filter to an unfiltrate side of the following filter, both filters mounted to the top cover
244 passage in a top cover from a filtrate side of a previous filter to an unfiltrate side of the following filter, both filters mounted to the top cover
246 passage in a top cover from a filtrate side of a filter mounted to the top cover, to the central outlet channel 508
248 passage from the central outlet channel 508 to an unfiltrate side of filters in a subsequent filter chamber
302 third top cover
304 third bottom cover
400 filter support plate
402 further filter support
404 further guiding channel
406 further filter
408 upper and lower joining portions
410 passage from a previous filter chamber to unfiltrate sides of parallel
filters in a following filter chamber
500 combined filtration device
502 first filter chamber
504 second filter chamber
506 third filter chamber
508 central outlet channel
600 intermediate element
700 vent structure

## Claims

1. A modular assembly kit for assembling a filtration device, in particular a small-scale filtration device, for production and/or processing of biopharmaceuticals, the modular assembly kit comprising at least:
a plurality of top covers (102, 202, 302) and a plurality of bottom covers (104, 204, 304);
a first top cover (102) having an inlet structure (106) formed on its upper side for supplying unfiltrate;
a first bottom cover (104) having a filtrate outlet structure (108) formed on its lower side for discharging filtrate;
a first filter chamber (502) formed between the first bottom cover (104) and a further bottom cover (204; 304);
a second filter chamber (504) formed between the further bottom cover (204; 304) and a further top cover (202);
a first lower filter support (114) being formed in the first filter chamber (504), the first lower filter support (114) carrying a first lower filter (113) having or contributing to a first filter area;
a further inner lower filter support (214) being formed in the second filter chamber (504), the further inner lower filter support (214) carrying a further inner lower filter (213) having or contributing to a second filter area, the second filter area being larger than the first filter area;
the first top cover (102), the further top cover (202), the first bottom cover (104) and the further bottom cover (204; 304) being arranged in a stacked arrangement along a general vertical flow direction (A);
the first top cover (102) being mounted on the outside of the further top cover (202);
the first bottom cover (104) being mounted on the outside of the further bottom cover (204; 304).

2. The modular assembly kit according to claim 1, **characterized in that** the horizontal dimensions of the first top cover (102) and the first bottom cover (102) are smaller than the horizontal dimensions of the further top cover (202) and the further bottom cover (204; 304), wherein preferably the horizontal dimensions of the first top cover (102) and the first bottom cover (104) and/or the horizontal dimensions of the further top cover (202) and the further bottom cover (204; 304) are the same.

3. The modular assembly kit according to claim 1 or 2, **characterized in that**
the first lower filter support (114) is formed on the upper side of the first bottom cover (104), and/or
the further inner lower filter support (214) is formed on an upper side of the further bottom cover (204; 304).

4. The modular assembly kit according to any of the preceding claims, **characterized in that**
a further outer lower filter support (232), optionally carrying a further outer lower filter (234), is formed in the first filter chamber (502), preferably on the lower side of the further bottom cover (204; 304), and/or
a further inner upper filter support (236), optionally carrying a further inner upper filter (240) is formed in the second filter chamber (504), preferably on the lower side of the further top cover (202; 302).

5. The modular assembly kit according to any of the preceding claims, **characterized in that** passages (242; 244) and/or structures (218) are provided in the further top cover (202; 302) so that the second filter chamber (504) and the first filter chamber (502) are arranged in series.

6. The modular assembly kit according to any of the preceding claims, **characterized in that** the filters (113, 234) in the first filter chamber (502) are arranged in series.

7. The modular assembly kit according to any of the preceding claims, **characterized in that** all filters (213, 240) in the second filter chamber (504) or certain filters (213, 240, 406, 406a, 406b) within a group of filters in the second filter chamber (504) are arranged in parallel.

8. The modular assembly kit according to any of claims 5 to 7, **characterized by** a third filter chamber (506) formed between the first top cover (102) and a further top cover (202), a further outer upper filter support (224) carrying a further outer upper filter (228) being formed in the third filter chamber (506), the third filter chamber (506) being in fluid connection with the unfiltrate inlet structure (106) and passages being provided in the further top cover (202) so that the third filter chamber (506) and the second filter chamber (504) are arranged in series.

9. The modular assembly kit according to claim 8, **characterized in that** a first upper filter support (120), optionally carrying a first upper filter (122), is formed in the third filter chamber (506), preferably on the lower side of the first top cover (102), the filters (228, 122) in the third filter chamber (506) preferably being arranged in series.

10. The modular assembly kit according to any of the preceding claims, **characterized in that** the number of filters (213, 240, 406, 406a, 406b) in the second filter chamber (504) is increased by one or more further filter supports (402) carrying further filters (406), the further filter supports (402) being formed on one or more further top covers (302) and/or further bottom covers (304; 204) and/or additional filter support plates (400), provided in the stacked arrangement between the first top cover (102) and the first bottom cover (104).

11. The modular assembly kit according to claim 10, **characterized in that** the horizontal dimension of each additional filter support plate (400) is substantially the same as the horizontal dimension of the adjacent top cover (102; 202; 303) and/or the adjacent bottom cover (104; 204; 304) and/or the adjacent filter support plate (400), respectively.

12. The modular assembly kit according to any of the preceding claims, further comprising at least one intermediate (600) element arranged in the second filter chamber (504), the intermediate element (600) dividing the filters (213, 240, 406, 406a, 406b) in the second filter chamber (504) into an upper group above the intermediate element (600) and a lower group below the intermediate element (600), the filters of the upper group being arranged in parallel, the filters of the lower group being arranged in parallel, and the upper group and the lower group being arranged in series.

13. The modular assembly kit according to any of the preceding claims, **characterized in that** in the stacked arrangement each top cover (102, 202, 302), each bottom cover (104, 204, 304) and each filter support plate (400) has at least one joining portion (110, 112, 210, 212, 220, 222, 408) for joining to a matching joining portion (110, 112, 210, 212, 220, 222, 408) of an adjacent top cover (102, 202, 302) or bottom cover (104, 204, 304) or filter support plate (400), the joining portions (110, 112, 210, 212, 220, 222, 408) preferably being formed on an upper and/or lower end face of a circumferential peripheral side wall of the respective top cover (102, 202, 302) or bottom cover (104, 204, 304) or filter support plate (400).

14. A filtration device (500), in particular a small-scale filtration device, for production and/or processing of bio-pharmaceuticals, the filtration device (500) being assembled from the modular assembly kit according to any of the preceding claims.

15. A method of filtration using the filtration device (500) assembled from the modular assembly kit according to any of claims 1 to 13, the method comprising a filtration performance that includes at least one of the following: a multi-stage filtration, preferably with different filter parameters, such as pore size, of the first and second filters; a redundant filtration, preferably with filters having substantially the same filtration parameters; a sterile filtration; a virus filtration, preferably with a prefilter and a main filter; a depth filtration; a purification by means of filters configured as membrane adsorbers.
